# EUROPEAN PATENT APPLICATION

(11) **EP 4 808 098 A1**
(43) Date of publication of application: **16.09.2026**
(21) Application number: 25227058.2
(22) Date of filing: 23.12.2025
(51) Int. Cl.: H04M 1/05, H04W 4/10, H04B 1/3883

(54) **PUSH-TO-TALK HEADSET ADAPTER**

(71) Applicant: Clarke, James, Sturminster Newton, Dorset DT10 1JH (GB)
(72) Inventor: Clarke, James, Sturminster Newton, Dorset DT10 1JH (GB)
(74) Representative: Cross, James Peter Archibald

(57) **Abstract**

A push to talk, PTT, headset adapter comprises: a headset connector for connection to a headset, the headset including a microphone; a PTT switch for selectively activating and deactivating the microphone via the headset connector; a wireless interface to a telephony base station; a main battery, or a main battery connector for connection to a main battery, for supplying power to the adapter; a backup battery for supplying power to the adapter; and a control circuit arranged to selectively control the supply of power to the adapter from the main battery or the backup battery; wherein the control circuit is arranged to control the supply of power from the backup battery in response to no or insufficient power being available from the main battery.

## Description

### Field of disclosure

Aspects of the present disclosure relate to headset adapters, more particularly to push-to-talk headset adapters.

### Background

Push-to-talk (PTT) headset adapters may be used in environments such as emergency services, air traffic control, and military. A PTT headset adapter is connected wirelessly (e.g. via Digital Enhanced Cordless Telecommunications or DECT) to a telephone base station and has a wired connection to a headset, and allows a user to control the state of a headset microphone during a call by pressing a button on the adapter to selectively activate or deactivate (i.e. unmute or mute) the microphone. This is desirable as it allows the user to control when transmissions are being made with less latency and less background noise which is important when clarity of communication is critical. Other headsets, such as open-microphone headsets, may rely on voice or audio detection for the microphone to activate, which can be unreliable, especially in emergency situations where communication is critical.

The base station acts as an interface to a telephony system (e.g. IP-based or analog) and may also include a recharging dock for the PTT headset adapter and/or the spare battery pack. The base station may display information on the status of the PTT headset adapter (e.g. battery life, whether push to talk is enabled, etc). An example of a conventional PTT headset adapter system is the Plantronics CA22 system.

Typically, PTT headset adapters are powered by an interchangeable rechargeable battery pack that can be replaced with a similar, charged (spare) battery pack when the battery power is low. When the interchangeable battery is removed from the PTT headset adapter, the latter loses power whilst the new battery pack is inserted. Hence, communication is interrupted until the new battery pack is inserted and the adapter reconnects to the base station. Once power is restored with the replacement battery pack, the adapter must reinitialise its internal circuitry, power up its wireless transceiver, and reestablish the wireless connection with the base station. This process can take between 30 to 60 seconds. This can be a significant problem in mission critical environments, such as emergency services.

### Summary

Aspects of the invention are defined by the accompanying claims.

In at least some embodiments, a PTT headset adapter comprises a headset connector, a PTT switch, a wireless interface, a main battery (or at least a connector for removable connection of a main battery), a backup battery, and a control circuit. The PTT switch selectively activates and deactivates the microphone via the headset connector. The wireless interface provides communication from the PTT headset adapter to a telephony base station. The main battery and the backup battery provide power to the adapter for operation of the headset, the PTT switch, and the wireless interface. The control circuit is arranged to selectively control the supply of power to the adapter from the main battery or the backup battery.

The control circuit is arranged to control the supply of power from the backup battery in response to no or insufficient power being available from the main battery. The control circuit preferably is arranged to control the supply of power from the main battery in response to detection that sufficient power is available from the main battery.

Preferably the main battery is rechargeable. The main battery may be accommodated within a housing of the adapter and may be removable from the adapter. Hence, the adapter may be provided with a connector for removable connection to the main battery and the adapter may be supplied without the main battery.

Preferably the adapter is configured to accommodate the main battery. The chemistry of the main battery may be a Lithium Polymer composition.

The backup battery preferably is rechargeable and integrated with the adapter. The backup battery is preferably rechargeable from the main battery when connected to the adapter.

Also provided is a push-to-talk, PTT, communication system comprising the adapter of the above embodiments, and a base station including a wireless interface for wireless connection to the adapter, and a telephony interface for connection to a telephony network. The telephony interface connects the headset to the telephony network via the adapter and the wireless interfaces. Preferably the system includes the headset.

The base station preferably includes a charging dock for recharging the main battery when removed from and/or accommodated within the adapter.

An advantage of these aspects is that the user is given a grace period in which they can still use the adapter while the main battery is being replaced, as the adapter continues to be operational by being powered by the backup battery. In this way, interruption of services in mission critical environments may be avoided.

The foregoing provides a simplified summary of one or more embodiments and aspects to provide a basic understanding of those embodiments and aspects and is not intended to identify key elements of all of the embodiments and aspects nor to provide an extensive overview of all embodiments and aspects. Various embodiments and aspects of the present invention are described without limitation below, with reference to the accompanying figures.

### Brief description of the drawings

The features, objects, and advantages of the present disclosure will become more apparent from the detailed description set forth below when taken in conjunction with the drawings in which the like reference numerals refer to similar elements.
Fig. 1 is a perspective view of an exemplary push-to-talk (PTT) headset system in accordance with aspects of the present disclosure
Fig. 2 is an architectural diagram of a PTT headset system in accordance with aspects of the present disclosure.
Fig. 3 is a block diagram of the circuit in an adapter for a PTT headset in accordance with aspects of the present disclosure.
Fig. 4 is an example circuit diagram in accordance with aspects of the present disclosure.

### Detailed description

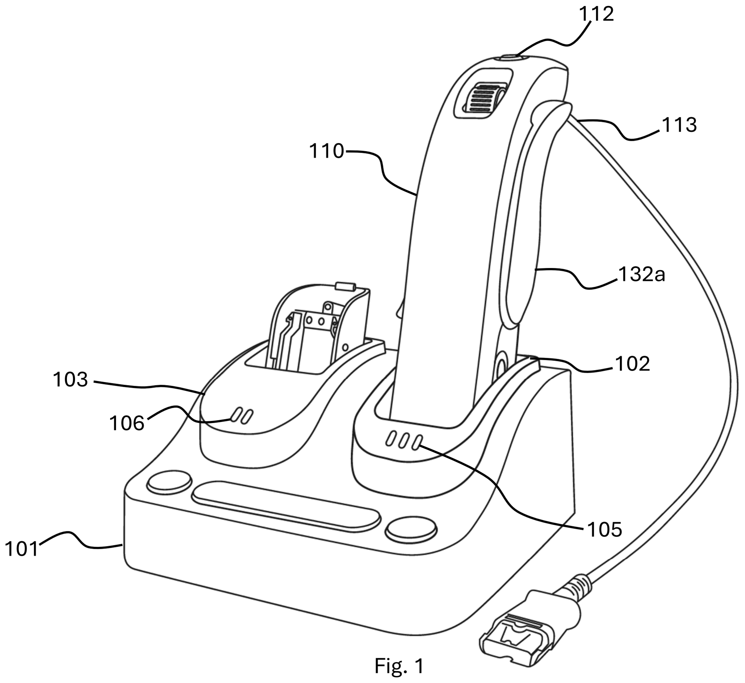

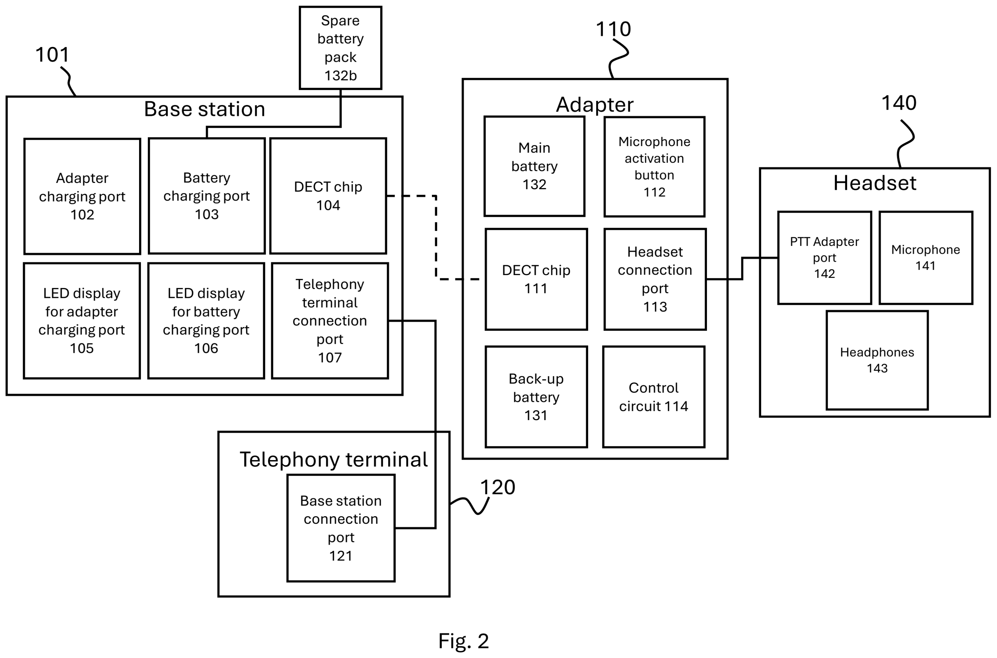

Fig. 1 shows a base station 101 and an adapter 110 removably located in a charging dock 102 of the base station 101. The PTT communication system of Fig. 2 shows the base station 101, adapter 110, a telephony terminal 120, and a headset 140.

The base station 101 serves as the central hub for the system of Fig. 2, as it connects the telephony terminal 120 (such as a computer or analog telephony switch) and the adapter 110. Communications received by the telephony terminal 120 are communicated to the adapter 110 via the base station 101, and vice versa. The headset 140 provides a microphone 141 and headphone(s) 143 wearable by the user.

The base station 101 may also display information, visible to a user, related to the adapter 110, such as battery life.

Communications by the user are controlled by the adapter 110 connected to the headset 140. In particular, the adapter 110 controls the state of the microphone 141 on the headset 140 by means of a PTT switch or microphone activation button 112.

Fig. 2 shows the base station 101 comprising two charging ports 102, 103, with respective LED displays 105, 106, a DECT chip 104, and a telephony terminal connection port 107.

The base station 101 may connect to the telephony terminal 120 via a connection between the telephony terminal connection port 107 on the base station 101 and a base station connection port 121 on the telephony terminal 120. As an example, this connection may be done through an RJ12 cable whereby the connection port 107 is an RJ12 connector.

A first port 102 is a charging port for the adapter 110. When the adapter 110 is in the first port 102, the adapter 110 may be charged. The adapter 110 may be removable from the first port 102.

A second port 103 is a charging port for a first battery pack 132a (i.e. main battery 132) that is not in use. A second battery pack 132b may be placed in the second port 103 when it is not in use (i.e. when the first battery pack 132a is connected to the adapter), so as to charge the second battery pack 132b. Should the second battery pack 132b be in use instead of the first battery back 132a, the first battery back 132a may be placed in the second port 103 to charge. The second battery pack 132b may have the similar specifications, if not the same, to the first battery pack 132a.

The adapter charging port 102 of the base station 101 may have an LED display 105 that indicates to a user the charge of the battery 132 in the adapter 110. The battery charging port 103 of the base station 101 may have an LED display 106 that indicates to a user that the rechargeable battery 132, when placed within the slot 103, is charging.

The base station 101 connects to and communicates with the adapter 110 using a wireless communication network, such as DECT. This is achieved by using a DECT chip 104 within the base station 101. The DECT chip 104 within the base station 101 communicates with a DECT chip 111 within the adapter 110.

Fig. 2 shows the adapter 110 comprising main battery 132, a backup battery 131 and a control circuit 114 for selectively powering the adapter 110 from the main battery 132 or the backup battery 132, depending on the availability of power from the main battery 132, for example detected by monitoring the output voltage of the main battery 132. The adapter 110 also includes a DECT chip 111, a microphone activation button 112, and a headset connector 113, each of which may be powered by the main battery 132 or the backup battery 131.

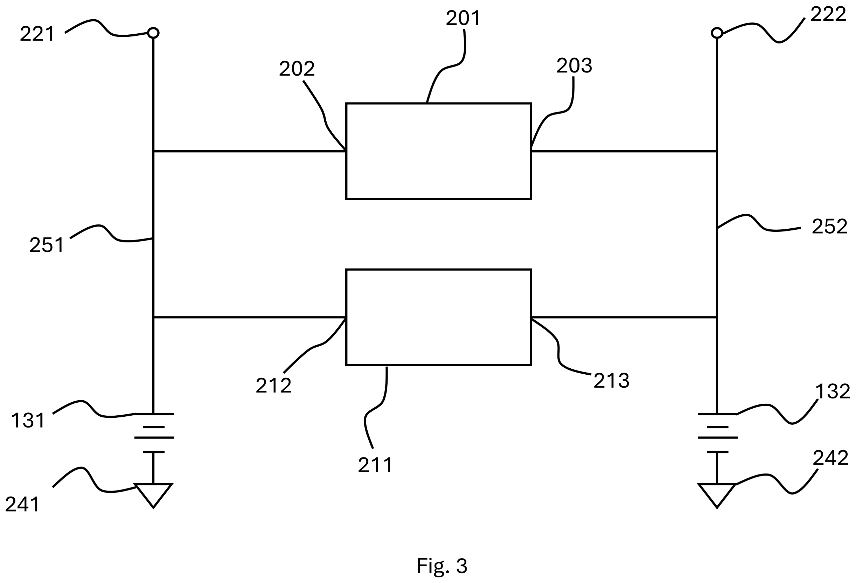

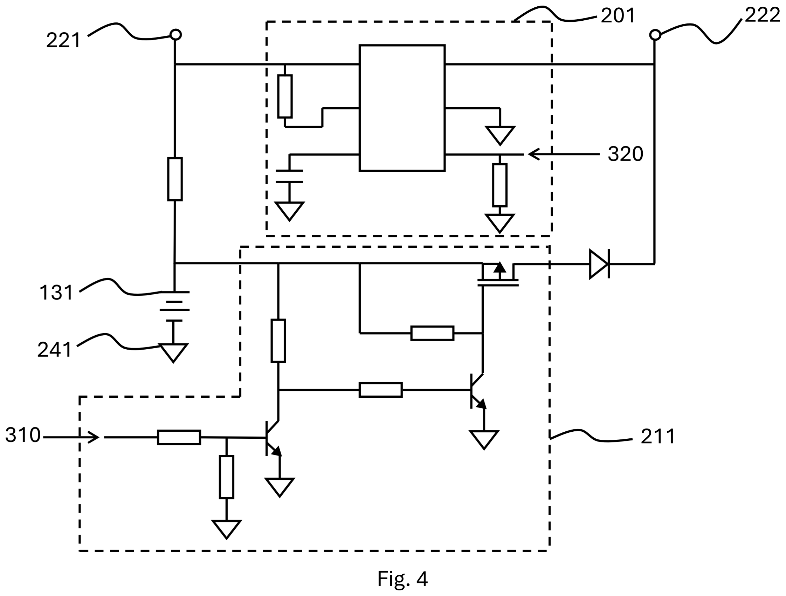

The back up battery 131 may be permanently installed within, integrated with, or built into the adapter 110. The operation of the backup battery 131 will be discussed in more detail in relation to Figs. 3 and 4.

The headset connection port 113 of the adapter 110 may be used to connect the adapter 110 to a PTT adapter port 142 on the headset 140. As an example, the connection from the adapter 110 to the headset 140 may be made using a poly compatible Quick Disconnect (QD) cable connected from the headset connection port 113 to the PTT adapter port 142.

The headset 140 includes a microphone 141 and one or more (e.g. a pair of) headphones 143 for voice communications via the telephony terminal 120.

The microphone activation button 112 on the adapter 110 may be pressed down to activate the microphone 141 on the headset 140 that is connected to the adapter 110 via the headset connection port 113. This operation can only take place when there is sufficient power being supplied to the adapter 110 by the main battery 132 or by the backup battery 131. The microphone activation button 112 may be located on the housing of the adapter 110. The microphone 141 may be activated when the microphone activation button 112 is held down.

Fig. 3 is a block diagram that illustrates example circuitry of an adapter 110 for a PTT headset. The circuit comprises a load switch 201 that has an output terminal 202 (also known as the Vout terminal 202) and an input terminal 203 (also known as the Vin terminal 203). The Vout terminal 202 connects to a first rail 251 which is connected to a first terminal 221. The first rail connects to a backup battery 131 and an input terminal 212 of a backup battery switch 211. The backup battery 131 is connected to a ground terminal 241. A backup battery switch 211 has an output terminal 213, connected to a second rail 252. The second rail 252 is connected to a second terminal 222 and the Vin terminal 203 of the load switch 201. The rail 252 is also connected to a main battery 132. The main battery 132 is connected to a ground terminal 242.

The operation of the circuit of Fig. 3 will now be described with reference to the apparatus of Fig. 2. Fig. 4 is an example circuit diagram of the circuit of Fig. 3

The first terminal 221 on the first rail 251 may be referred to as a 'SUB_BAT' terminal, which charges the backup battery 131. The backup battery 131 is only charged when the main battery 132 is present in the adapter.

The first terminal 222 on the second rail 252 may be referred to as a '+VBAT' terminal, which supplies power to the adapter 110.

The backup battery 131 may be a rechargeable battery. The backup battery 131 may be built into the adapter 110, and thus cannot be removed from the adapter 110. As an example, the backup battery 131 may be a lithium-ion battery. It will be appreciated that other appropriate battery types may be used. As an alternative, a capacitor or supercapacitor may be used.

The main battery 132 may be connected to the adapter 110. The main battery 132 may be removable from the adapter 110, for example as a main battery pack 132a may be swapped with another main battery pack 132b, for example when the main battery 132 needs to be charged.

In some examples, the main battery 132 may have a larger capacity than the backup battery 131. For example, the main battery 132 may have a capacity of 400mAh and the backup battery 131 may have a capacity of 40mAh. Different capacity values are supported for both batteries, the above is just an example.

In normal operation, the main battery 132 is connected to the adapter 110. The main battery 132 provides power to the adapter 110 via the +VBAT terminal 222.

During normal operation the load switch 201 is in an 'ON' state. In this state, current is allowed to flow through the Vin terminal 203 of the load switch 201 to the Vout switch 202and to the SUB_BAT terminal 221. This allows the main battery 132 to charge the backup battery 131 during normal operation. The state of the load switch 201 is controlled by a first signal 320, which may originate from the control circuit 114 such as a voltage detection circuit or from other monitoring components within the adapter 110.

During normal operation the backup battery switch 211 is in an 'OFF' state. The state of the backup battery switch 211 is controlled by a second signal 310. The second signal 310 may originate from the control circuit 114 such as a voltage detection circuit, or from other monitoring components within the adapter 110.

It may be indicated to the user that the main battery 132 in the adapter 110 is running low on charge. As an example, this may be indicated to the user by the LED display 105 on the adapter charging port 102 of the base station 101. In response to this information the user may swap the main battery 132a connected to the adapter 110 with a spare battery 132b.

When the main battery 132a is removed from the adapter 110 of the PTT headset, a control circuit may detect that the main battery 132a has been removed. The control circuit may also detect when the main battery 132a is unable to provide sufficient power to the circuit. The control circuit enables the backup battery 131 to provide power to the circuit instead. The backup battery switch 211 will allow current from the backup battery 131 to flow to the device in the absence of the main battery 132.

Advantageously, the backup battery 131 provides a grace period in which the adapter 110 remains fully operational. The length of time that the adapter 110 is powered on by the backup battery 131 will depend on the capacity of the backup battery 131. As an example, using the earlier described values where a backup battery 131 has a capacity of 40mAh and a main battery 132 has a capacity of 400mAh, the backup battery 131 will provide power to the adapter 110 for around 180 seconds after the main battery 132 has been removed from the adapter 110. The duration depends on the design and capacity of the backup battery 131. These values of the illustrative examples above are non-limiting, and different durations are possible.

When the main battery 132 is removed, the backup battery switch 211 is driven to an 'ON' state, allowing current to flow through to the +VBAT terminal 222. Also, when the main battery 132 is removed, the load switch 201 is driven 'OFF' state. This stops any current from flowing across the load switch 201. This means that whilst the main battery 132 is being swapped (i.e. from the first battery 132a to the second battery 132b), the adapter 110 is still functional as it is still being powered by the backup battery 131. This means that the user is still able to use the adapter 110 for a period of time whilst they swap the main battery 132. This avoids the issue of the adapter 110 losing connection with the base station 101, and also means that the button 112 of the adapter 110 can still be used effectively for communications as it will maintain its functionality.

As an example, the main battery 132 may have been removed from the adapter 110 because the LED display 105 indicated to the user that the battery 132 currently attached to the adapter 110 had low charge.

During normal operation the load switch 201 is in an 'ON' state. The state of the load switch 201 is controlled by a first signal 320, which may originate from the control circuit 114 such as a voltage detection circuit, or from other monitoring components within the adapter 110.

During normal operation the backup battery switch 211 is in an 'OFF' state. The state of the backup battery switch 211 is controlled by a second signal 310 which may originate from the control circuit 114 such as a voltage detection circuit, or from other monitoring components within the adapter 110.

The control circuit 114, by means of the first and second signals 310, 320, ensures that power for the adapter 110 is automatically drawn from the backup battery 131 whenever the main battery 132 is removed or insufficiently charged. The control circuit 114, by means of the first and second signals 310, 320, also ensure that power is automatically drawn from the main battery 132 when the main battery 132 is replaced.

The terms "first" and "second" are used to differentiate the two signals from one another, and do not indicate an order in which the signals are applied.

The system is designed to accommodate various battery chemistries, capacities, and form factors without affecting operation. The control circuitry dynamically adjusts to maintain uninterrupted power flow from either the main or backup battery, regardless of battery type or configuration.

Many other variants and embodiments will be apparent to the skilled reader, all of which are intended to fall within the scope of the invention whether or not covered by the claims as filed. Protection is sought for any and all novel subject matter and combinations thereof disclosed herein.

## Claims

1. A push to talk, PTT, headset adapter comprising:
a headset connector for connection to a headset, the headset including a microphone;
a PTT switch for selectively activating and deactivating the microphone via the headset connector;
a wireless interface to a telephony base station;
a main battery connected or connectable for supplying power to the adapter;
a backup battery, capacitor or supercapacitor for supplying power to the adapter; and
a control circuit arranged to selectively control the supply of power to the adapter from the main battery or the backup battery;
wherein the control circuit is arranged to control the supply of power from the backup battery in response to no or insufficient power being available from the main battery.

2. The adapter of claim 1, wherein the control circuit is arranged to control the supply of power from the main battery in response to detection that sufficient power is available from the main battery.

3. The adapter of claim 1 or claim 2, wherein the control circuit is arranged to monitor an output voltage of the main battery.

4. The adapter of any preceding claim, wherein the main battery is rechargeable.

5. The adapter of any preceding claim, wherein the main battery connector is arranged to allow the main battery to be removed from the adapter.

6. The adapter of any preceding claim, wherein the backup battery is rechargeable and integrated with the adapter.

7. The adapter of claim 6, wherein the backup battery is rechargeable from the main battery when connected to the adapter.

8. A push-to-talk, PTT, communication system comprising:
the adapter of any preceding claim; and
a base station including a wireless interface for wireless connection to the adapter, the base station having a telephony interface for connection to a telephony network, so as to connect the headset to the telephony network via the adapter.

9. The system of claim 8, wherein the base station includes a charging dock for recharging the main battery.

10. The system of claim 8 or claim 9, including the headset.
